# FASCICULE DE BREVET EUROPEEN

(11) **EP 4 349 576 B1**
(45) Date de publication et mention de la délivrance du brevet: **30.10.2024**
(21) Numéro de dépôt: 23201469.6
(22) Date de dépôt: 03.10.2023
(51) Int. Cl.: B29C 70/38, B23K 26/02, B23K 26/035, B23K 26/064, B23K 26/073, B29C 65/16, B23K 26/04, B29C 64/218, B29C 64/147, B29C 35/08

(54) **TÊTE DE DÉPOSE DE FIBRES PRÉ-IMPRÉGNÉES AVEC DISPOSITIF DE RÉGLAGE DE LA CHAUFFE LASER**
FASERLEGEKOPF MIT EINER VORRICHTUNG ZUR REGELUNG DES LASERHEIZPROZESSES
PREPREG FIBER LAYING HEAD WITH LASER HEATING CONTROL DEVICE

(30) Priorité: 04.10.2022 FR 2210166
(43) Date de publication de la demande: 10.04.2024
(73) Titulaire: Daher Aerospace, 94310 Orly (FR)
(72) Inventeur: MOOTHOO, Julien, 44340 Bouguenais (FR); LESPINASSE, Antoine, 44300 Nantes (FR)
(74) Mandataire: Hamann, Jean-Christophe

(56) Documents cités:
- EP-A1- 1 967 316
- DE-T2- 69 204 520
- US-A1- 2021 154 921
- US-A1- 2021 387 406

## Description

### Domaine technique

L'invention concerne une tête pour la dépose automatisée de fibres continues préimprégnées, comprenant un moyen de chauffage par laser et un dispositif pour le réglage de la tache laser produite par ce moyen de chauffage.

L'invention est plus particulièrement, mais non exclusivement, adaptée à la dépose de fibres imprégnées d'un polymère thermoplastique par drapage de bande ou par placement de fibres.

### Technique antérieure

La dépose de fibres automatisée est réalisée par une machine comprenant des moyens pour dévider lesdites fibres pré-imprégnées d'un polymère thermodurcissable ou thermoplastique, sous la forme de bandes ou de mèches de fibres continues, lesquelles sont appliquées sur un substrat par une tête de dépose comprenant un rouleau, et amenant les fibres à déposer entre le rouleau et le substrat, le rouleau exerçant une pression sur les fibres de sorte à les appliquer sur le substrat et obtenir leur adhésion à celui-ci.

La tête de dépose est supportée par un dispositif de déplacement programmé, tel qu'un robot ou une machine-outil, et se déplace relativement au substrat selon des trajectoires et une vitesse définies de sorte à y déposer des couches successives de fibres et ainsi constituer une structure composite de plis stratifiés.

Le substrat est généralement constitué de fibres imprégnées ayant été déposées lors d'un passage précédent et qui constituent un pli dans la structure composite ce même pli ayant lui-même été déposé sur un pli précédent.

Plus particulièrement dans le cas de fibres imprégnées d'un polymère thermoplastique, cette adhésion ne se produit que si le polymère imprégnant les fibres est porté à une température suffisante, de l'ordre de sa température de fusion, et que la pression est appliquée durant un temps suffisant pour déclencher les phénomènes d'adhésion ou d'autohésion.

Selon la nature du polymère thermoplastique imprégnant les fibres, la température de chauffage au niveau du site de dépose est couramment comprise entre 200 °C et 400 °C, voire plus.

Cette température élevée de chauffage doit affecter à la fois les fibres, juste avant leur dépose sur le substrat, dans la zone où les fibres rencontrent le substrat, et le substrat à la fois dans la zone de dépose et devant celle-ci dans le sens de déplacement de la tête de dépose.

Afin d'obtenir un temps d'application de la pression suffisant, sans ralentir outre mesure la vitesse de dépose, laquelle atteint facilement 30 m/min lors d'opérations de placement de fibres, le rouleau appliquant cette pression est déformable, de sorte que la pression est appliquée selon une surface sensiblement rectangulaire s'étendant sur une largeur correspondant à celle du rouleau et, dans le sens de la dépose, en arrière du contact entre le rouleau et la zone de dépose, fonction de la déformabilité du rouleau et de la pression exercée.

Le document « High power diode laser-assisted fiber placement of composite structure », John M. Haake, Westec 2005 Conférence April 4-7, 2005 in LA California, décrit différentes techniques de chauffage utilisées au cours d'opérations de placement fibres imprégnées d'un polymère thermoplastique et l'avantage de l'utilisation d'une chauffe par laser en regard d'autres techniques de l'art antérieur. US 2021/387406 A1 décrit une tête de dépose pour une dépose automatique de fibres préimprégnées sur une surface de dépose.

Le document WO 2016/055700 décrit un procédé de placement de fibres imprégnées d'un polymère thermoplastique, mettant en oeuvre une tête de dépose équipée d'un système de chauffage pour chauffer, lors du drapage, la fibre à draper et le substrat, juste en amont du rouleau par rapport à la direction de la tête, et ainsi souder la fibre au substrat. Le système de chauffage est de type laser et comprend une optique montée sur la tête. Le faisceau émis par une source déportée par rapport à la tête de dépose est acheminé via une fibre optique jusqu'à un dispositif optique adapté pour former un faisceau laser en direction de la ligne de contact entre le rouleau et le substrat.

Dans un tel dispositif de l'art antérieur, le dispositif optique est monté articulé par rapport à la tête de dépose de sorte à pouvoir régler dans l'espace l'orientation du faisceau laser et positionner la zone de chauffage par rapport à la ligne de pincement c'est-à-dire là où le rouleau rencontre la surface de dépose dans le sens de la dépose.

Les lasers de puissance utilisés pour le chauffage du site de dépose ont une puissance couramment comprise entre 1 kW et 12 kW. Ces têtes de dépose sont de plus équipées d'un laser pilote, de puissance réduite et empruntant le même chemin optique que le laser de puissance, lequel laser pilote est utilisé pour le réglage du dispositif optique.

À titre d'exemple le laser de puissance utilisé pour le chauffage est dans le spectre de l'infrarouge proche (longueur d'onde 1000 +/- 20 nm) et le laser pilote est lui dans le visible (longueur d'onde 650 nm) avec une puissance de l'ordre du watt.

En se plaçant dans un plan perpendiculaire au laser de puissance ou pilote, le dispositif optique projette une tache laser, généralement de forme rectangulaire, la répartition de puissance dans cette tâche étant relativement homogène, lorsque ce plan perpendiculaire se situe entre l'optique et le plan focal à une distance dite distance de travail de l'optique.

Pour obtenir l'effet de chauffage visé, il est nécessaire de positionner cette tache laser de manière appropriée par rapport au point de dépose, c'est-à-dire la ligne de pincement entre le rouleau et la surface de dépose.

La tolérance de positionnement de la tache laser est inférieure au millimètre.

Or, selon la nature des fibres déposées, de la largeur et de l'épaisseur des mèches ou des bandes, de la pression appliquée par le rouleau, de la nature plus ou moins déformable dudit rouleau adapté à l'opération visée et de l'angle d'inclinaison de la tête de dépose relativement à la surface de dépose, la position du point de pincement varie dans l'espace et nécessite par conséquent qu'un réglage du dispositif optique soit réalisé préalablement à une opération de dépose.

De plus, la position du dispositif optique est susceptible de dériver dans le temps, ainsi que le rouleau de s'user, et par suite, des réglages réguliers sont nécessaires même sur une machine réalisant toujours les mêmes opérations avec les mêmes matériaux.

Un mauvais réglage du dispositif optique conduit à un chauffage mal adapté, susceptible d'entraîner des défauts dans les pièces composites ainsi réalisées.

Certains procédés de dépose, tel que décrit par exemple dans les documents US 10 016 931 et US 2018 0319102A1, nécessite un contrôle précis de la température dans le site de dépose et par suite un positionnement précis de la tache laser.

Or, lorsque le rouleau est appliqué avec une pression adaptée sur une surface, l'accessibilité à la zone concernée et délicate, de plus, la scène observable ne comprend aucun plan perpendiculaire au laser, le rouleau est cylindrique et la surface de dépose n'est ni parallèle ni perpendiculaire à un tel plan de sorte que l'estimation visuelle de la position de la tache laser est très subjective, dépendant fortement de l'opérateur et ne permet en aucun cas d'atteindre la précision de positionnement désirée.

### Résumé de l'invention

L'invention vise à résoudre les inconvénients de l'art antérieur et concerne à cette fin une tête de dépose pour une dépose automatique de fibres pré-imprégnées sur une surface de dépose comprenant :
- un rouleau d'application apte à tourner autour d'un axe de rotation porté par la tête de dépose, le rouleau d'application étant amovible et positionné par rapport la tête par des surfaces de référence,
- des moyens de pression aptes à appliquer une pression d'application du rouleau d'application sur la surface de dépose,
- un laser de chauffage apte à chauffer les fibres pré-imprégnées et la surface de dépose au cours de la dépose automatique,
- un dispositif optique apte à focaliser le laser de chauffage pour projeter une tache laser avec une répartition de puissance dans la tache laser à une distance de travail, le dispositif optique étant lié à la tête de dépose par une liaison polyarticulée réglable, adaptée pour régler une position relative du dispositif optique par rapport à la tête de dépose,
- un laser pilote, de puissance réduite par rapport au laser de chauffage, configuré pour emprunter le dispositif optique,
la tête de dépose comprend :
- un dispositif de réglage adapté pour être installé sur la tête de dépose à la place du rouleau d'application et positionné par rapport à la tête de dépose par les surfaces de référence,
- un écran translucide adapté à recevoir une projection de la tache laser du laser pilote par le dispositif optique sur une face exposée au dispositif optique,
- l'écran translucide étant lié au dispositif de réglage par une liaison pivot blocable au d'un axe de pivot,
- une caméra orientée vers une face opposée à la face exposée de l'écran translucide et apte à acquérir une image de l'écran translucide, et
- un moniteur de contrôle apte à afficher l'image acquise par la caméra.

Ainsi la tête de dépose objet de l'invention permet, par l'intermédiaire du laser pilote, de visualiser et de positionner précisément la tache laser projetée par le dispositif optique, dans le repère de la machine et sur une surface plane constituée par l'écran translucide.

L'invention est mise en oeuvre selon les modes de réalisation exposés ci-après lesquels sont à considérer individuellement ou selon toute combinaison techniquement opérante.

Avantageusement, la tête de dépose comprend des moyens de réglage de la position de l'axe de la liaison pivot relativement aux surfaces de référence.

Ce mode de réalisation permet, avec le même dispositif de réglage, de procéder à des réglages adaptés à différents diamètres de rouleau d'application.

Avantageusement, la tête de dépose comprend un inclinomètre pour régler une orientation de l'écran translucide autour de la liaison pivot.

Ainsi le réglage initial du dispositif de réglage est simplifié et plus précis.

Avantageusement, l'écran translucide comprend un quadrillage sur la face exposée.

Ce mode de réalisation facilite la détermination du facteur d'échelle entre les pixels acquis par la caméra et les dimensions de la scène observée.

L'invention concerne également un système comprenant la tête de dépose selon l'invention et des moyens informatiques comprenant des moyens de calcul aptes à analyser l'image acquise par la caméra.

Ce système permet de faciliter les réglages et d'automatiser partiellement ceux-ci.

L'invention concerne également un procédé pour le régalage du dispositif optique de la tête de dépose du système, comprenant des étapes consistant à :
I) calculer une position relative aux surfaces de référence d'une ligne de pincement du rouleau d'application sur la surface de dépose lorsque celui-ci est appliqué sur la surface de dépose avec la pression d'application,
II) obtenir des conditions visées de chauffage, par le laser de chauffage, de la surface de dépose et de la fibre pré-imprégnées au cours de l'opération de dépose,
III) déterminer en fonction d'un résultat de l'étape II) un angle d'orientation α du laser de chauffage, et une position relative théorique du centre de la tache laser par rapport à la ligne de pincement à la distance de travail,
IV) installer le dispositif de réglage à la place du rouleau d'application,
V) positionner et orienter l'écran translucide par sa liaison pivot en fonction de l'angle d'orientation α déterminé à l'étape III,
VI) projeter la tache laser sur l'écran translucide avec le laser pilote,
VII) acquérir l'image de la tache laser avec la caméra et l'afficher sur le moniteur de contrôle,
VIII) afficher sur le moniteur de contrôle la position de la position théorique du centre de la tache laser obtenue à l'étape III,
IX) agir sur la liaison polyarticulée réglable pour faire coïncider le centre de l'image de la tache laser avec la position théorique du centre de la tache laser affichée sur le moniteur de contrôle.

Selon un mode de réalisation, le procédé comprend en outre des étapes consistant à :
- analyser avec les moyens informatiques une répartition de l'intensité lumineuse de la tache laser acquise à l'étape VII,
- comparer la répartition lumineuse de la tache laser acquise à l'étape VII avec la répartition de puissance de la tache laser projetable par le dispositif optique,
- déduire et afficher des écarts issus de la comparaison,
- agir sur la liaison polyarticulée réglable pour minimiser les écarts.

Ainsi, la mise en oeuvre de ce mode de réalisation permet un régalage plus fin du dispositif optique de sorte à obtenir une répartition optimale de la puissance de chauffage.

Avantageusement, les moyens informatiques comprennent un modèle cinématique de la liaison polyarticulée réglable, le procédé comprenant après l'étape VIII des étapes consistant à :
- calculer une configuration initiale de la liaison polyarticulée réglable en fonction de la position de l'image acquise à l'étape VII et du modèle cinématique de la liaison polyarticulée réglable,
- déterminer une configuration cible de la liaison polyarticulée réglable pour faire coïncider le centre de l'image de la tache laser avec la position théorique du centre de la tache laser affichée sur le moniteur de contrôle en fonction de du modèle cinématique de la liaison polyarticulée réglable,
- afficher la configuration cible sur le moniteur de contrôle,
- au cours de l'étape IX agir sur la liaison polyarticulée réglable pour reproduire la configuration cible.

Ainsi le réglage de la liaison polyarticulée est facilité.

### Brève description des dessins

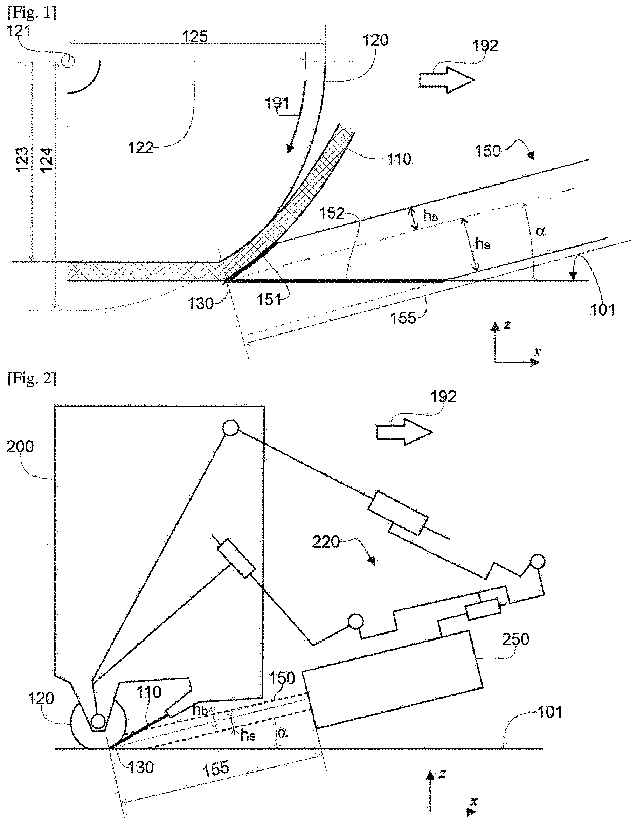

L'invention est exposée ci-après selon ses modes de réalisation préférés, nullement limitatifs, et en référence aux figures 1 à 9 dans lesquelles :
**Fig.1**
   [Fig.1] montre selon une vue partielle le site de dépose dans un plan perpendiculaire à la surface de dépose et à l'axe de rotation d'application :
**Fig.2**
   [Fig.2] représente de manière schématique une tête de dépose selon une vue de côté dans un plan parallèle à celui de la [Fig.1] ;
**Fig.3**

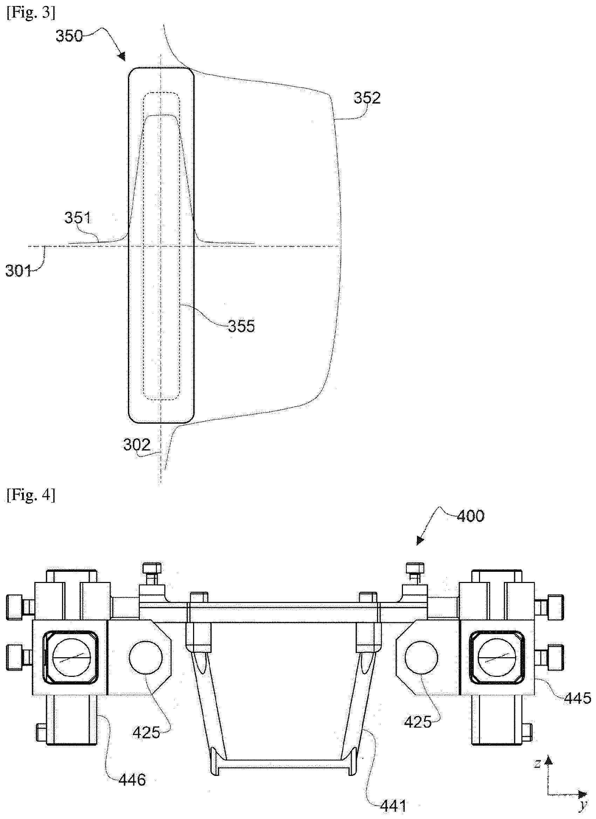

   [Fig.3] montre un exemple de tache laser projeté par le dispositif optique pour la réalisation du chauffage laser ;
**Fig.4**
   [Fig.4] montre un exemple de réalisation du dispositif de réglage en vue de derrière (côté tête de dépose) tel qu'installé sur la tête de dépose, le support de l'écran translucide étant orienté parallèlement à la surface de dépose ;
**Fig.5**

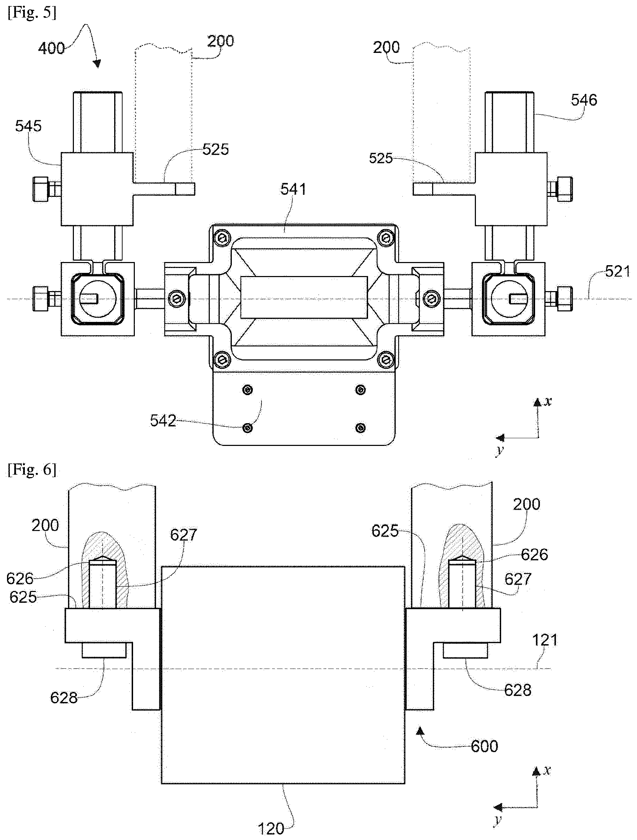

   [Fig.5] montre le dispositif de la [Fig.4] en vue de dessus tel qu'installé sur la tête de dépose, le support de l'écran translucide étant orienté parallèlement à la surface de dépose ;
**Fig.6**
   [Fig.6] est un exemple simplifié en vue de dessus et en coupe partielle de l'installation d'un rouleau d'application sur la tête de dépose ;
**Fig.7**

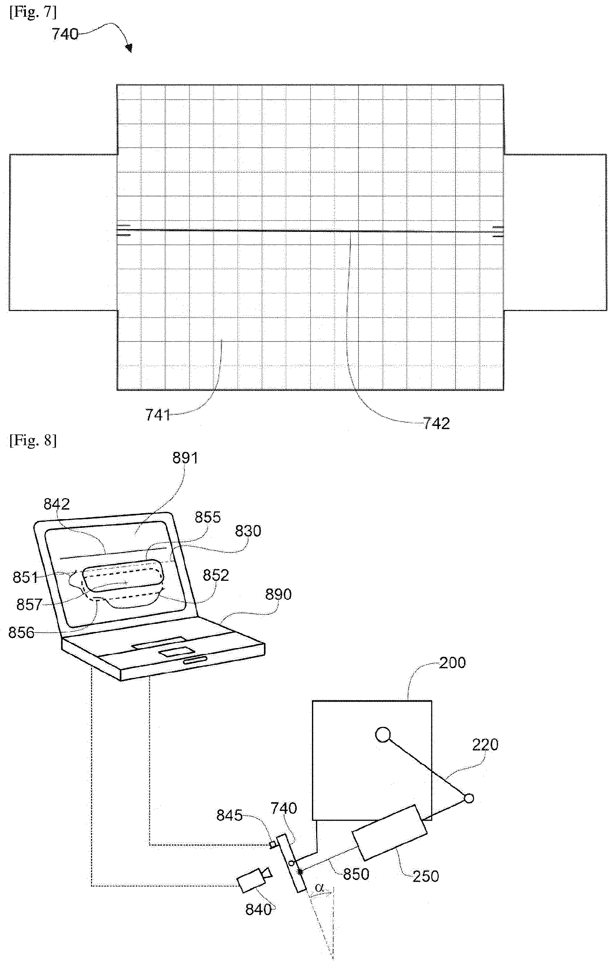

   [Fig.7] montre un exemple d'écran translucide installé sur le dispositif de réglage ;
**Fig.8**
   [Fig.8] montre schématiquement un exemple de réalisation du système objet de l'invention ;
[Fig.9]

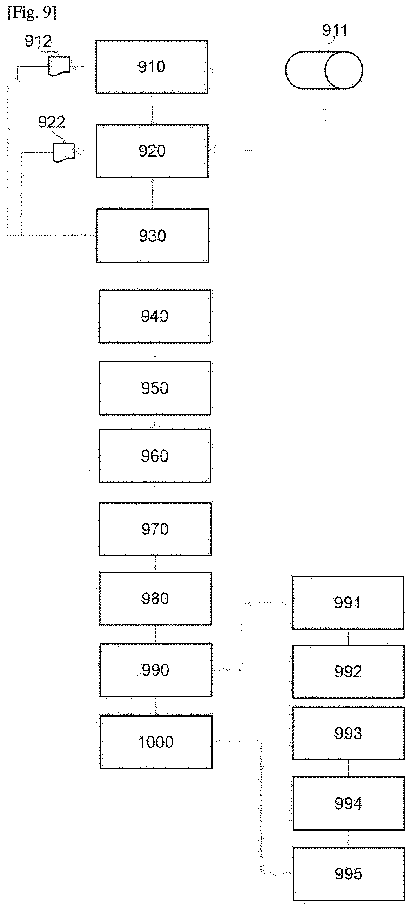

   [Fig.9] est un organigramme d'un exemple de réalisation du procédé objet de l'invention.

### Description des modes de réalisation

[Fig.1] représente schématiquement la dépose automatique d'une bande de fibres préimprégnées (110) sur une surface de dépose (101).

La bande de fibres pré-imprégnées (110) est appliquée sur la surface de dépose (101) par un rouleau d'application (120), lequel rouleau se déplace parallèlement et relativement à la surface de dépose (101) selon une vitesse de dépose (192) programmée.

Ce déplacement relatif du rouleau d'application à la vitesse de dépose, entraîne sa rotation autour d'un axe de rotation (121) perpendiculaire au plan de la figure.

Le rouleau d'application est caractérisé par son rayon nominal (122) et par la matière le constituant, laquelle matière est plus ou moins souple et conditionne l'écrasement du rouleau d'application sous l'effet de la force de pressage qui lui est appliquée.

Sous l'effet de la force de pressage la section du rouleau d'application prend une forme elliptique aplatie au niveau du contact avec la surface de dépose.

Ainsi, la forme du rouleau d'application, déformé par la force de pressage, est estimée en première approximation par le grand axe (125) et le petit axe (124) de l'ellipse et par la distance (123) de la zone aplatie au grand axe de l'ellipse perpendiculairement à la surface de dépose,

En se basant sur cette géométrie il est possible de calculer la position de la ligne de pincement (130) par rapport à l'axe de rotation (121) du rouleau d'application, ligne de pincement où la bande de fibres pré-imprégnées (110) rejoint la surface de dépose (101).

La sélection de la dureté du rouleau d'application et donc son écrasement sous l'effet de la force de pressage dépendent de la nature de la matière déposée et de la complexité géométrique de la forme à réaliser. Ainsi pour la dépose sur une surface plane de fibres pré-imprégnées d'un polymère thermodurcissable présentant avant cuisson une pégosité importante, les conditions d'application, dureté du rouleau d'application et force de pressage sont telles que le rouleau reste de section circulaire avec un contact quasi linéique avec la surface de dépose le long de la ligne de pincement.

En revanche, pour la dépose de fibres pré-imprégnées d'un polymère thermoplastique, les conditions d'application sont telles que le rouleau est plus fortement écrasé de sorte à appliquer une pression pendant un temps plus long sur l'empilage de plis à la vitesse de déplacement (192) de la tête de dépose.

À titre d'exemple illustratif et afin de fixer les ordres de grandeur, un rouleau de diamètre nominal de 70 mm avec une dureté shore de 40 est écrasé de sorte que la distance (123) de la zone aplatie au grand axe de l'ellipse est de 30 mm sous une force de pressage de 1500 N.

Les valeurs relatives à l'écrasement du rouleau d'application sont calculées et calculables de manière empirique en fonction des caractéristiques du rouleau d'application et de la force de pressage. À partir de ces valeurs relatives à l'écrasement la position théorique de la ligne de pincement (130) par rapport à l'axe de rotation du rouleau d'application est déterminée par des relations géométriques.

Plus particulièrement pour la dépose de fibres pré-imprégnées d'un polymère thermoplastique, les fibres pré-imprégnées (110) et la surface de dépose (101) doivent être chauffées à une température généralement proche de la température de fusion du polymère d'imprégnation au moment de la dépose.

Ce chauffage est par exemple réalisé par un laser de chauffe émettant un faisceau laser (150) dirigé sensiblement vers la ligne de pincement (130).

La répartition de la surface chauffée entre la partie chauffée (151) de la bande déposée et la partie chauffée (152) de la surface de dépose, dépend du centrage du faisceau laser par rapport à la ligne de pincement, caractérisée par les paramètres h_{b} et hₛ, de l'inclinaison α du faisceau laser par rapport à la surface de dépose (101) et de la distance de travail (155) du laser.

Le profil de chauffe optimum dépend fortement de la nature de la matière mise en oeuvre et de sa microstructure. Des travaux de recherche montrent l'existence de relations entre la qualité des pièces dont l'obtention met en oeuvre ce procédé de dépose de fibres pré-imprégnées : porosités inter/intra-plis, résistance interlaminaire, taux de cristallinité, dégradation thermique et contraintes résiduelles ; et le paramétrage du laser de chauffage et plus particulièrement la localisation d'une température cible au niveau de la ligne de pincement, mais aussi de la vitesse de dépose.

À titre d'exemple non limitatif, la dépose de fibres de carbone pré-imprégnées d'un polyetheréthercétone (PEEK), avec une vitesse de dépose de 30 m/min, un laser de hauteur (h_{b}+hₛ) de 28 mm et une température cible de 350 °C, le réglage optimum est obtenu avec un angle αde 19° et un décalage du centre du faisceau laser de -14 mm, c'est-à-dire h_{b} = 0 et hₛ = 28 mm, par rapport à la ligne de pincement (130), soit un chauffage entièrement appliqué sur la surface de dépose.

Pour la même matière déposée à 24 m/min le réglage optimum est obtenu pour un angle α de 20° et une répartition h_{b} = 4,2 mm et hₛ = 23,8 mm.

Ces conditions optimales sont déterminées par des essais et les résultats sont transcrits dans une base de données ou des abaques, permettant à l'homme du métier de procéder aux réglages adaptés en fonction du matériau et des conditions de dépose visées.

[Fig.2] montre schématiquement un exemple de réalisation d'une tête de dépose (200) comportant un dispositif de liaison polyarticulée (220) pour le réglage de la position d'un dispositif optique (250) focalisant le laser de chauffage (150), relativement à l'axe de rotation du rouleau d'application (120), dans lequel un cercle représente une liaison pivot et un rectangle une liaison glissière.

Ainsi ce dispositif de liaison polyarticulée (220) permet de régler l'angle α, la distance de travail (155) et le positionnement h_{b}, hₛ du laser de chauffage (150) par rapport à la ligne de pincement (130), pour obtenir les paramètres optimums de dépose en fonction de l'opération.

D'autres cinématiques de réglage sont possibles pour cette liaison polyarticulée mais restent d'une manière générale assez complexes pour assurer à la fois la liberté nécessaire dans les réglages, et, une fois lesdits réglages réalisés, assurer une position stable du dispositif optique après blocage des liaisons.

Avantageusement la cinématique de la liaison polyarticulée est modélisée ce qui permet de déterminer la position des liaisons pour obtenir une position et une orientation du dispositif optique par une analyse cinématique inverse.

[Fig.3] la tache laser (350) projetée par le dispositif optique est de forme sensiblement rectangulaire avec des répartitions de puissances (351, 352) selon ses axes centraux, axe transversal (31) et axe longitudinal (302), telle qu'elle comprend une zone de puissance sensiblement constante (355) centrée sur la tache laser.

[Fig.6] le rouleau d'application (120) est monté en liaison pivot autour de son axe de rotation (121) sur un support (600) permettant sa mise et son maintien en position sur la tête de dépose (200), selon une interface spécifique, assurant ainsi la possibilité d'utiliser plusieurs types de rouleaux d'application, de diamètre ou de duretés différentes sur une même tête de dépose,

Selon un exemple de réalisation, l'interface spécifique comprend ses surfaces de références comprenant une surface d'appui plan (625) et un ou plusieurs alésages (626) de centrage.

Le support (600) comprend des surfaces aptes à venir en appui sur la surface en appui plan de la tête de dépose et un ou plusieurs doigts (626) aptes à coopérer avec les alésages de centrage de la tête de dépose.

Le blocage du support (600) dans la tête de dépose est, selon un exemple de réalisation, réalisé par des moyens radialement expansibles (non représentés) portés par lesdits doigts, associés à des moyens de serrage (628) permettant, lors de leur serrage, de réaliser à la fois l'expansion des moyens radialement expansible dans les alésages de centrage (626) et de plaquer le support contre la surface d'appui plan (625).

[Fig.4] et [Fig.5] un dispositif de réglage (400) est installé sur la tête de dépose en lieu et place du rouleau d'application.

À cette fin, selon cet exemple de réalisation le dispositif de réglage comprend des surfaces d'appui (525) aptes à venir en applique contre les surfaces d'appui plan de la tête de dépose (200), et des alésages (425) adaptés au montage des doigts comportant des moyens radialement expansibles pour le centrage et la fixation du dispositif de réglage sur la tête de dépose selon le même principe et les mêmes surfaces de référence, surface d'appui plan et alésages de centrage de la tête de dépose, que celles utilisées pour le montage du rouleau d'application.

Le dispositif de réglage (400) comprend un support d'écran (541) apte à recevoir un écran translucide constitué de verre, de papier ou de plastic, ledit écran n'étant pas représenté sur les figures 4 et 5.

Le support d'écran (541) est en liaison pivot blocable, selon un axe d'articulation (521) par rapport au dispositif de réglage.

Le support d'écran (541) comprend un support de caméra (441) permettant de positionner une caméra vidéo, perpendiculairement à une surface de l'écran translucide et à une distance appropriée de celle-ci.

Selon un exemple de réalisation, le support d'écran comprend une plateforme (542) apte à recevoir des accessoires, plus particulièrement un inclinomètre apte à être fixé sur ladite plateforme, pour mesurer un angle d'orientation du support d'écran autour de l'axe d'articulation (521) de la liaison pivot blocable.

Selon un exemple de réalisation, le dispositif de régalage (400) comprend des curseurs de réglage (545) en liaison glissière blocable sur des profilés guides (546) dits horizontaux, pour le réglage de la position de l'axe (521) de la liaison pivot dans une direction perpendiculaire à la surface d'appui (525) ainsi que des curseurs de réglage (445) en liaison glissière blocable sur des profilés guides (446) dits verticaux, pour le réglage de la position de l'axe (521) de cette liaison pivot dans une direction parallèle à la surface d'appui (525).

Ainsi, la position de l'axe (521) de la liaison pivot est réglable afin d'être confondue, selon un exemple de réalisation, avec la position théorique calculée de l'axe longitudinal de la tache laser et permettre l'utilisation du même dispositif de réglage pour effectuer des ajustements correspondant à différents diamètres de rouleau d'application.

Selon ce mode de réalisation, le positionnement de l'écran translucide comprend les étapes consistant à :
- déterminer les conditions de dépose au niveau du rouleau d'application : diamètre, dureté de la matière constituant ledit rouleau,
- calculer la position relative de la ligne de pincement vis-à-vis de l'axe de rotation du rouleau d'application en fonction de ces conditions,
- déterminer la position relative théorique de la tache laser vis-à-vis de la ligne de pincement (h_{b}, hₛ et α) pour obtenir la répartition spatiale de chauffage désirée,
- en déduire le positionnement de l'écran translucide vis-à-vis des surfaces de référence de sorte que l'axe de la liaison pivot blocable soit confondu avec l'axe longitudinal la tache laser.

La position théorique de l'écran translucide étant ainsi déterminée, ce réglage est appliqué de manière précise au positionnement de l'écran translucide en utilisant à cette fin les moyens de réglage (445, 545) et un moyen de mesure tel qu'un pied à coulisse.

Selon un mode de réalisation plus sophistiqué au moins un de chaque paire de profilés guides (446, 546) comprend une règle optique et les curseurs associés à ces profilés guides comprennent un lecteur adapté, afin de faciliter ces réglages.

L'homme du métier comprend que d'autres positionnements initiaux de l'écran translucide sont possibles sans modifier de manière substantielle la méthode de régalage. À titre d'exemple, selon un autre mode de mise en oeuvre la position de l'axe de la liaison pivot blocable est réglée de sorte à être confondues avec l'axe de rotation du rouleau d'application sélectionné.

[Fig.7] Un écran translucide (740) est installé sur le support d'écran du dispositif de réglage. Cet écran translucide est, selon des exemples de réalisation, constitué de verre, de papier ou de plastique dépoli, et comprend avantageusement un quadrillage (741) gravé sur l'une de ses faces.

Avantageusement, le quadrillage comprend une ligne (742) matérialisant la position de l'axe de la liaison pivot du dispositif de réglage.

La tête de dépose comprend un laser pilote de puissance réduite, apte à emprunter le dispositif optique, de sorte à produire une tache laser similaire en forme et en répartition de puissance à celle produite par le laser de chauffage. Lorsque le laser pilote est dirigé, au moyen du dispositif optique, sur l'écran translucide (740), la tache laser est projetée et devient visible sur l'écran translucide.

Le laser de chauffage est dans l'infrarouge, généralement autour de 1000 nm de longueur d'onde et n'est donc pas visible, le laser pilote est dans le spectre visible, autour de 650 nm de longueur d'onde.

En revenant à la [Fig.4], le support de caméra (441) permet d'installer une caméra vidéo, apte à observer la face de l'écran translucide opposée à la face sur laquelle est projetée la tache laser par le laser pilote.

A titre d'exemple non limitatif, la caméra vidéo est de type 1080p Full HD avec une fréquence d'acquisition de 30 images par secondes. Ce type de caméra est couramment disponible dans le commerce, par exemple sous la référence Logitech^{®} C920 HD Pro.

Selon un exemple de réalisation, les conditions de dépose visées, notamment la dureté du rouleau d'application et la force pressage, la répartition du chauffage entre la surface de dépose et les fibres déposées, sont connues.

La forme de la tache laser et la répartition de puissance dans cette tache laser le sont également par les caractéristiques du dispositif optique.

Ces informations connues permettent, d'une part, de calculer de manière théorique la position relative de la ligne de pincement par rapport à l'axe de rotation du rouleau, et d'autre part déterminer l'angle d'orientation α du laser de chauffage ainsi que sa position relative (h_{b}, h_{s,}distance de travail) par rapport à la ligne de pincement pour obtenir le résultat désiré, par des relations géométriques.

[Fig.8] le système objet de l'invention permet d'effectuer les réglages du système optique (250) au moyen de la liaison polyarticulée (220) liant ledit système optique à la tête de dépose (200) pour obtenir le résultat escompté.

À cette fin, le rouleau d'application étant démonté et le dispositif de réglage installé à sa place, l'écran translucide (740) du dispositif de réglage, après que son axe de liaison pivot ait été positionné correctement par rapport à la tête de dépose (200) de sorte à être confondu avec la position théorique de l'axe longitudinal de la tache laser en rapport avec l'opération de dépose visée, est orienté de l'angle α visé par rapport à une normale théorique à la surface de dépose.

Les systèmes et les opérations décrites ne nécessitent pas que la tête de dépose (200) soit positionnée vis-à-vis d'une surface de dépose encombrant les accès et la visibilité. Le dispositif de réglage étant mis en position relativement à des surfaces de référence de la tête de dépose, l'orientation dans l'espace de l'écran translucide par rapport à la tête de dépose est déduite de l'orientation prévue de la tête de dépose par rapport à la surface de dépose dans le programme de dépose de fibres.

Un inclinomètre (845), installé sur la plateforme porte accessoires du dispositif de réglage, permet de réaliser ce réglage. Ledit inclinomètre est avantageusement connecté à des moyens informatiques (890), ici un ordinateur portable, qui permet d'afficher en clair la valeur de l'angle α quelle que soit l'orientation de la tête de dépose lors du réglage.

Un premier réglage grossier de la position du dispositif optique (250) au moyen de la liaison polyarticulée (220) est réalisé de sorte à projeter, avec le laser pilote (850), une tache laser sur l'écran translucide (740).

La caméra vidéo (840) permet d'acquérir une image de cette tache laser et, la caméra étant liée aux moyens informatiques (890), une image de la tache laser (855) est affichée sur l'écran vidéo desdits moyens informatiques, lequel est utilisé comme un moniteur de contrôle (891).

Avantageusement, ledit écran vidéo affiche également la ligne (842) représentant la position de l'axe de rotation de l'écran translucide, telle que gravée sur le dépoli dudit écran, et qui correspond, selon un exemple de mise en oeuvre, à la position théorique de l'axe longitudinal de la tache laser.

Un traitement de l'image acquise par la caméra (840) permet l'affichage de la tache laser sur le moniteur de contrôle (891) en fausses couleurs fonction de la répartition de l'intensité lumineuse. Additionnellement les profils (851, 852) de répartition de la puissance lumineuse dans la tache laser sont également affichés.

Avantageusement, la position théorique (830) de la ligne de pincement est également affichée sur le moniteur de contrôle (891).

Le quadrillage de l'écran translucide permet de calculer le facteur d'échelle de l'affichage sur le moniteur de contrôle et ainsi de mesurer les distances et les angles entre les différents éléments affichés, par des moyens d'analyse d'image classiques ou même avec un réglet.

L'affichage est en temps réel à la fréquence d'acquisition de la caméra. Selon un mode de réalisation, le moyen informatique (890) affiche sur le moniteur de contrôle (891) la position théorique (856) de la tache laser telle que celle-ci a été calculée en fonction du résultat visé.

Selon un mode de réalisation simplifié, seule la position théorique du centre (857) de la tache laser est affichée sur le moniteur de contrôle.

Selon un premier mode de mise en oeuvre de ce système, en vue du réglage de la position et de l'orientation du dispositif optique (250), le technicien dispose à partir de l'affichage du moniteur de contrôle, d'une information qualitative de l'écart entre l'orientation du dispositif optique par rapport à sa position théorique visée. C'est-à-dire qu'il sait, au moins approximativement, de par l'affichage et son expérience, dans quel sens agir sur la liaison polyarticulée (220) pour s'approcher du résultat visé.

Ainsi, le technicien agit directement sur la liaison polyarticulée (220) pour rapprocher progressivement le réglage du dispositif optique du réglage visé en observant l'affichage en temps réel sur le moniteur de contrôle, par exemple, en faisant coïncider la tache laser affichée (855) avec sa position visée théorique (856) et en faisant en sorte que la répartition de puissance lumineuse affichée (851, 852) soit dans une épure acceptable c'est-à-dire relativement uniforme sur la surface de la tache laser.

Durant tout ce réglage l'écran translucide (740) et la caméra (840) sont fixes vis-à-vis des surfaces de référence de la tête de dépose (200) et ce réglage permet l'orientation dans l'espace du dispositif optique par approximations successives tout en restant rapide de mise en oeuvre.

Selon un autre mode de mise en oeuvre, plus automatisée, le moyen informatique (890) comprend un modèle cinématique de la liaison polyarticulée (220) et comprend également un programme d'analyse d'image.

Selon ce mode de mise en oeuvre, le moyen informatique comprend également en mémoire les caractéristiques du dispositif optique, notamment la distance focale et la distance de travail ainsi que des paramètres, décrivant les caractéristiques de la tache laser projetée notamment :
- la position du pic de puissance selon les axes principaux de la tache laser,
- la largeur et la longueur de la tache laser à 50 % de l'intensité du pic,
- la forme de la répartition de puissance dans la tache laser,
sans que cette liste ne soit exhaustive.

Ces données sont généralement des données constructeur, alternativement elles sont déterminées par des essais.

L'écran ayant été positionné vis-à-vis surfaces de références de la tête de dépose (200) et incliné de l'angle α visé, le dispositif optique est grossièrement orienté vers l'écran et l'image de la tache laser produite par le laser pilote (850) est acquise par la caméra (840).

Les moyens informatiques procèdent à une analyse de l'image acquise par la caméra et de la répartition de la puissance lumineuse, le programme d'analyse d'image calcule notamment :
- la position du barycentre de la tache laser,
- les dimensions de la tache laser et les compare avec les paramètres constructeur,
- les moments statistiques d'ordre 2 de la répartition de puissance par rapport au barycentre ce qui permet d'affiner l'analyse de l'orientation dans l'espace du dispositif optique par rapport à l'écran translucide.

À partir de ces données un programme évalue la position relative du dispositif optique par rapport à l'écran translucide, et en utilisant un modèle cinématique inverse de la liaison polyarticulée, indique, sur le moniteur de contrôle (891), la correction à effectuer sur les différents réglages de cette liaison polyarticulée, afin d'obtenir le résultat théorique escompté.

Ainsi, l'invention concerne également un procédé pour le réglage du laser de chauffage d'une tête de dépose au moyen du système de réglage décrit ci-avant.

[Fig.9] selon une première de préparation, en fonction des conditions de dépose visée, vitesse, matière, type de rouleau d'application, inclinaison de la tête de dépose, force de pressage, cette étape consiste à calculer (910) la position de la ligne de pincement relativement aux surfaces de références de la tête de dépose. Les données d'entrée de cette étape sont par exemple obtenues à partir d'une base de données (911).

Une deuxième étape de préparation consiste à obtenir (920) les conditions de chauffage visées pour la dépose. Ces conditions sont obtenues, par exemple depuis la base de données (911).

À partir des résultats (912, 922) des étapes précédentes, une troisième étape de préparation consiste à déterminer (930) les conditions de chauffage laser notamment la position de la tache laser vis-à-vis de la ligne de pincement (h_{b}, hₛ) et l'orientation α du laser de chauffage.

Ces trois premières étapes de préparation ne nécessitent que des moyens informatiques voire des tables ou des abaques, et ne nécessitent pas le dispositif de réglage. Elles sont réalisables à l'avance pour couvrir plusieurs situations de dépose et leurs résultats résumés sous forme de fiches pratiques utilisables par le technicien chargé d'effectuer le réglage ou le contrôle du dispositif optique.

Pour réaliser le réglage proprement dit, une première étape consiste à installer (940) le dispositif de réglage à l'emplacement destiné à recevoir le rouleau d'application sur la tête de dépose. Cette installation comprend le réglage de la position de l'axe de la liaison pivot du support d'écran de sorte que cet axe soit confondu avec la position théorique de l'axe longitudinal de la tache laser visé pour l'opération de dépose de fibres tel que déterminé au cours des trois premières étapes.

L'étape suivante consiste à orienter (950) l'écran translucide de l'angle α déterminer lors de la troisième étape de préparation.

L'étape suivante consiste à projeter (960) la tache laser obtenue par le laser pilote empruntant le dispositif optique sur l'écran translucide. Comme indiqué plus haut cette projection est réalisée en orientant et positionnant de manière grossière le dispositif optique au moyen de la liaison polyarticulée.

Une fois, la tache laser projetée sur l'écran translucide, les étapes suivantes consiste à acquérir (970) l'image de la tache laser par la caméra vidéo et d'afficher celle-ci sur le moniteur de contrôle.

A minima le centre de la tache laser tel que celui-ci devrait être situé relativement à l'axe de la liaison pivot de l'écran translucide, par exemple confondu avec celui-ci, compte tenu des calculs réalisés au cours de la troisième étape de préparation est affiché (990) sur le moniteur de contrôle. Alternativement ou de manière complémentaire cet affichage comprend une image des contours de la tache laser telle que celle-ci devrait être positionnée dans le cas d'un réglage parfait.

La dernière étape consiste, pour le technicien, à agir (1000) sur la liaison polyarticulée de sorte à faire coïncider l'affichage de la position théorique de la tache laser avec la tache projetée sur l'écran translucide et affichée sur le moniteur de contrôle.

Comme indiqué plus haut, selon le mode de réalisation, plusieurs niveaux d'assistance peuvent être apportés au technicien via des programmes informatiques dédiés.

Notamment lorsque les moyens informatiques comprennent un modèle cinématique de la liaison polyarticulée, selon des étapes optionnelles consistant à calculer (992) une configuration initiale de la liaison polyarticulée en fonction d'une étape d'analyse d'image (991) de la répartition lumineuse dans la tache laser, de comparer (993) cette répartition lumineuse avec une configuration visée et d'en déduire (994) des écarts et soit afficher ces écarts pour assister le technicien, soit de déterminer (995) une configuration cible de la liaison polyarticulée réduisant les écarts par un modèle cinématique inverse. De sorte à assister le technicien lors de son action sur la liaison polyarticulée.

Les meilleures techniques de régalage de l'art antérieur utilisant un gabarit de réglage, permettent d'atteindre une répétabilité de positionnement du dispositif optique et de la tache laser de l'ordre de +/- 2 mm et ne permettent pas d'analyser la répartition de puissance dans la tache laser par conséquent ne permettent pas un réglage rigoureux de la distance de travail, ni de l'orientation effective du laser.

La mise en oeuvre du système de réglage décrit ci-avant permet d'atteindre une répétabilité de positionnement de+/- 0,5 mm, une précision de l'orientation du laser de chauffage de 0,1°, et une précision de réglage de la distance de travail de +/- 1 mm.

Ainsi, ce système est non seulement utile pour le réglage du dispositif de chauffage d'une tête de dépose mais également pour son contrôle périodique,

## Revendications

1. Tête de dépose (200) pour une dépose automatique de fibres préimprégnées (110) sur une surface de dépose (101) comprenant :
- un rouleau d'application (120) apte à tourner autour d'un axe de rotation (121) porté par la tête de dépose, le rouleau d'application étant amovible et positionné par rapport la tête par des surfaces de référence (625, 626),
- des moyens de pression aptes à appliquer une force de pressage du rouleau d'application sur la surface de dépose,
- un laser de chauffage (150) apte à chauffer les fibres pré-imprégnées (110) et la surface de dépose (101) au cours de la dépose automatique,
- un dispositif optique (250) apte à focaliser le laser de chauffage (150) pour projeter une tache laser (350) avec une répartition de puissance (351, 352) dans la tache laser à une distance de travail (155), le dispositif optique étant lié à la tête de dépose (200) par une liaison polyarticulée réglable (220), adaptée pour régler une position relative du dispositif optique (250) par rapport à la tête de dépose (200),
- un laser pilote (850), de puissance réduite par rapport au laser de chauffage, configuré pour emprunter le dispositif optique (250),
**caractérisée en ce que** la tête de dépose comprend :
- un dispositif de réglage (400) adapté pour être installé sur la tête de dépose à la place du rouleau d'application et positionné par rapport à la tête de dépose par les surfaces de référence (625, 626),
- un écran translucide (740) adapté à recevoir une projection de la tache laser du laser pilote (850) par le dispositif optique (250) sur une face exposée au dispositif optique,
- l'écran translucide (740) étant lié au dispositif de réglage (400) par une liaison pivot blocable autour d'un de pivot (521),
- une caméra (840) orientée vers une face opposée à la face exposée de l'écran translucide (740) et apte à acquérir une image de l'écran translucide, et
- un moniteur de contrôle (891) apte à afficher l'image acquise par la caméra.

2. Tête de dépose selon la revendication 1, comprenant des moyens de réglage (445, 545) de la position de l'axe (521) de la liaison pivot relativement aux surfaces de référence.

3. Tête de dépose selon la revendication 1, comprenant un inclinomètre (842) pour régler une orientation de l'écran translucide (740) autour de la liaison pivot.

4. Tête de dépose selon la revendication 1, dans lequel l'écran translucide (740) comprend un quadrillage (741) sur la face exposée.

5. Système comprenant la tête de dépose selon la revendication 1, et des moyens informatiques (890) comprenant des moyens de calcul aptes à analyser l'image acquise par la caméra.

6. Procédé pour le régalage du dispositif optique de la tête de dépose du système selon la revendication 5, comprenant des étapes consistant à :
I) calculer (910) une position relative aux surfaces de référence d'une ligne de pincement (130) du rouleau d'application sur la surface de dépose lorsque celui-ci est appliqué sur la surface de dépose avec la force de pressage,
II) obtenir (920) des conditions visées de chauffage, par le laser de chauffage, de la surface de dépose et de la fibre pré-imprégnées pour la réalisation de l'opération de dépose,
III) déterminer (930) en fonction d'un résultat de l'étape II) un angle d'orientation α du laser de chauffage, et une position relative théorique du centre de la tache laser par rapport à la ligne de pincement à la distance de travail (155),
IV) installer (940) le dispositif de réglage (400) à la place du rouleau d'application (120) et positionner l'écran translucide par rapport aux surfaces de référence en fonction du résultat des étapes I) à III),
V) orienter (950) l'écran translucide (740) par sa liaison pivot en fonction de l'angle d'orientation α déterminé à l'étape III,
VI) projeter (960) la tache laser sur l'écran translucide avec le laser pilote (850),
VII) acquérir (970) l'image de la tache laser avec la caméra (840) et l'afficher sur le moniteur de contrôle (891),
VIII) afficher (980) sur le moniteur de contrôle (891) la position théorique du centre (857) de la tache laser telle qu'obtenue à l'étape III,
IX) agir sur la liaison polyarticulée réglable (220) pour faire coïncider le centre de l'image de la tache (855) laser avec la position théorique du centre (857) de la tache laser affichée sur le moniteur de contrôle (891).

7. Procédé selon la revendication 6, comprenant des étapes consistant à :
- analyser (991) avec les moyens informatiques une répartition de l'intensité lumineuse de la tache laser acquise à l'étape VII,
- comparer (993) la répartition lumineuse de la tache laser acquise à l'étape VII avec la répartition de puissance de la tache laser projetable par le dispositif optique,
- déduire (994) et afficher des écarts issus de la comparaison,
- agir sur la liaison polyarticulée réglable pour minimiser les écarts.

8. Procédé selon la revendication 7, dans lequel les moyens informatiques comprennent un modèle cinématique de la liaison polyarticulée réglable, le procédé comprenant après l'étape VIII des étapes consistant à :
- calculer (992) une configuration initiale de la liaison polyarticulée réglable en fonction de la position de l'image acquise à l'étape VII et du modèle cinématique de la liaison polyarticulée réglable,
- déterminer (995) une configuration cible de la liaison polyarticulée réglable pour faire coïncider le centre de l'image de la tache laser avec la position théorique du centre de la tache laser affichée sur le moniteur de contrôle en fonction de du modèle cinématique de la liaison polyarticulée réglable,
- afficher la configuration cible sur le moniteur de contrôle,
- au cours de l'étape IX agir sur la liaison polyarticulée réglable pour reproduire la configuration cible.

## Patentansprüche

1. Ablagekopf (200) zum automatischen Auflegen von vorimprägnierten Fasern auf eine Ablagefläche (101), umfassend:
- eine Auftragswalze (120), die sich um eine Drehachse (121) drehen kann, die von dem Ablagerungskopf getragen wird, wobei die Auftragswalze abnehmbar ist und relativ zu dem Kopf durch Bezugsflächen (625, 626) positioniert wird,
- Druckmittel, die so konfiguriert sind, dass sie einen Anpressdruck der Auftragswalze auf die Ablagefläche ausüben,
- einen Heizlaser (150), der in der Lage ist, die vorimprägnierten Fasern (110) und die Ablagefläche (101) während des automatischen Auflegens zu erhitzen,
- eine optische Vorrichtung (250), die zum Fokussieren des Heizlasers (150) konfiguriert ist, um einen Laserfleck (350) mit einer Leistungsverteilung (351, 352) in dem Laserfleck in einem Arbeitsabstand (155) zu projizieren, wobei die optische Vorrichtung mit dem Abscheidekopf (200) durch ein einstellbares Mehrgelenkgestänge (220) verbunden ist, das konfiguriert ist, um eine relative Position der optischen Vorrichtung (250) in Bezug auf den Abscheidekopf einzustellen,
- einen Pilotlaser (850) mit im Vergleich zum Heizlaser reduzierter Leistung, der so konfiguriert ist, dass er die optische Vorrichtung (250) verwendet, wobei
der Abscheidekopf umfasst:
- eine Justiervorrichtung (400), die dazu geeignet ist, anstelle der Auftragswalze auf dem Abscheidekopf installiert zu werden und in Bezug auf den Abscheidekopf durch die Bezugsflächen (625, 626) positioniert zu werden,
- einen lichtdurchlässigen Schirm (740), der so konfiguriert ist, dass er eine Projektion des Laserpunkts des Pilotlasers (850) durch die optische Vorrichtung auf eine der optischen Vorrichtung ausgesetzte Fläche empfängt,
- wobei der lichtdurchlässige Schirm (740) mit der Einstellvorrichtung (400) durch ein Drehgelenk verbunden ist, das um eine Drehachse (521) verriegelbar ist,
- eine Kamera (840), die auf eine Fläche gegenüber der freiliegenden Fläche des lichtdurchlässigen Schirms (740) ausgerichtet und so konfiguriert ist, dass sie ein Bild des lichtdurchlässigen Schirms erfasst, und
- einen Kontrollmonitor (891), der so konfiguriert ist, dass er das von der Kamera aufgenommene Bild anzeigt.

2. Ablagekopf nach Anspruch 1, umfassend Einstellmittel (445, 545) zum Einstellen einer Position der Achse des Drehgelenkes (521) relativ zu den Bezugsflächen.

3. Ablagerungskopf nach Anspruch 1, mit einem Neigungsmesser (832) zum Einstellen der Ausrichtung des lichtdurchlässigen Schirms (740) um das Drehgelenk.

4. Abscheidekopf nach Anspruch 1, wobei der lichtdurchlässige Schirm (740) auf der freiliegenden Fläche ein Gitter (741) aufweist.

5. System mit dem Ablagerungskopf nach Anspruch 1 und einer Computereinrichtung (890), die eine Berechnungseinrichtung umfasst, die so konfiguriert ist, dass sie das von der Kamera erfasste Bild analysiert.

6. Verfahren zum Einstellen der optischen Vorrichtung des Ablagerungskopfes des Systems nach Anspruch 5, das die folgenden Schritte umfasst:
I) Berechnen (910) einer Position relativ zu den Bezugsflächen eines Walzenspaltes (130) der Auftragswalze auf der Ablagefläche, wenn diese mit dem Auftragsdruck auf die Ablagefläche aufgebracht wird,
II) Erzielung (920) von Zielbedingungen für die Erwärmung der Abscheidungsoberfläche und der vorimprägnierten Fasern während des Abscheidungsvorgangs durch den Heizlaser,
III) Bestimmen (930) eines Ausrichtungswinkels α des Heizlasers und einer theoretischen relativen Position des Mittelpunkts des Laserpunkts in Bezug auf die Spaltlinie im Arbeitsabstand (155) aus einem Ergebnis von Schritt II),
IV) Anbringen (940) der Einstellvorrichtung (400) an der Stelle der Auftragswalze (120) und Positionieren des lichtdurchlässigen Schirms in Bezug auf die Bezugsflächen gemäß einem Ergebnis der Schritte I) bis III), V) Ausrichten (950) des lichtdurchlässigen Schirms (740) durch sein Drehgelenk gemäß dem in Schritt III bestimmten Ausrichtungswinkel α,
V) Projizieren (960) des Laserpunkts auf den durchsichtigen Bildschirm mit dem Pilotlaser,
VI) Erfassen (970) des Bildes des Laserpunktes mit der Kamera (840) und Anzeigen auf dem Kontrollmonitor (891),
VII) Anzeige (980) der in Schritt III ermittelten theoretischen Position des Mittelpunkts des Laserpunkts auf dem Kontrollmonitor,
VIII) IX), die auf das einstellbare Mehrgelenkgestänge (220) einwirkt, um die Mitte des Bildes des Laserpunktes (885) mit der theoretischen Position der Mitte (857) des auf dem Kontrollmonitor (891) angezeigten Laserpunktes in Übereinstimmung zu bringen.

7. Das Verfahren nach Anspruch 6 umfasst außerdem die folgenden Schritte:
- Analyse (991) der Verteilung der Lichtintensität des in Schritt VII erfassten Laserpunkts mit Hilfe des Computers,
- Vergleichen (993) der Lichtverteilung des in Schritt VII erfassten Laserpunkts mit der Leistungsverteilung des von der optischen Vorrichtung projizierbaren Laserpunkts,
- Ableitung von (994) Abweichungen aus dem Vergleich und Darstellung der Abweichungen,
- die auf das einstellbare Polygelenk wirken, um die Abweichungen zu minimieren.

8. Verfahren nach Anspruch 7, wobei die Computermittel ein kinematisches Modell des einstellbaren Mehrgelenkgestänges umfassen, wobei das Verfahren die folgenden Schritte umfasst:
- Berechnen (992) einer Anfangskonfiguration des einstellbaren Mehrgelenkgestänges auf der Grundlage der Position des in Schritt VII erfassten Bildes und des kinematischen Modells des einstellbaren Mehrgelenkgestänges,
- Bestimmen (995) einer Zielkonfiguration des einstellbaren Mehrgelenkgestänges, um die Mitte des Laserpunktbildes mit der theoretischen Position der Mitte des auf dem Kontrollmonitor angezeigten Laserpunktes gemäß dem kinematischen Modell des einstellbaren Mehrgelenkgestänges in Übereinstimmung zu bringen,
- die Anzeige der Sollkonfiguration auf dem Kontrollmonitor,
- während des Schritts IX auf das einstellbare Mehrgelenkgestänge einwirken, um die Sollkonfiguration zu reproduzieren.

## Claims

1. A deposition head (200) for automated fiber layup of pre-impregnated fibers on a deposition surface (101)) comprising:
- an application roller (120) capable of rotating around a rotation axis (121) carried by the deposition head, the application roller being removable and positioned relative to the head by reference surfaces (625, 626),
- pressure means configured to applying an application pressure of the application roller to the deposition surface,
- a heating laser (150) capable of heating the pre-impregnated fibers (110) and the deposition surface (101) during automated layup,
- an optical device (250) configured for focusing the heating laser (150) to project a laser spot (350) with a power distribution (351, 352) in the laser spot at a working distance (155), the optical device being connected to the deposition head (200) by an adjustable polyarticulated linkage (220), configured to adjust a relative position of the optical device (250) with respect to the deposition head,
- a pilot laser (850) of reduced power as compared with the heating laser, configured to use the optical device (250),
the deposition head comprising:
- an adjustment device (400) adapted to be installed on the deposition head in place of the application roller and positioned in relation to the deposition head by the reference surfaces (625, 626),
- a translucent screen (740) configured to receive a projection of the laser spot of the pilot laser (850) by the optical device on a face exposed to the optical device,
- the translucent screen (740) being connected to the adjustment device (400) by a pivot link lockable around a pivot axis (521),
- a camera (840) oriented towards a face opposite the exposed face of the translucent screen (740) and configured to acquire an image of the translucent screen, and
- a control monitor )891) configured for displaying the image acquired by the camera.

2. The deposition head of claim 1, comprising adjustment means (445,545) for adjusting a position of the axis of the pivot link (521) relative to the reference surfaces.

3. The deposition head of claim 1, comprising an inclinometer (832) for adjusting an orientation of the translucent screen (740) about the pivot link.

4. The deposition head of claim 1, wherein the translucent screen (740) comprises a grid (741) on the exposed face.

5. A system comprising the deposition head of claim 1, and computer means (890) comprising calculation means configured to analyze the image acquired by the camera.

6. A method for adjusting the optical device of the deposition head of the system of claim 5, comprising the steps of:
I) calculating (910) a position relative to the reference surfaces of a nip lone (130) of the application roller on the deposition surface when the latter is applied to the deposition surface with the application pressure,
II) obtaining (920) target conditions for heating, by the heating laser, the deposition surface and the pre-impregnated fibers during the deposition operation,
III) determining (930) from a result of step II) an orientation angle α of the heating laser and a theoretical relative position of the center of the laser spot with respect to the nip line at the working distance (155),
IV) installing (940) the adjustment device (400) in place of the application roller (120) and positioning the translucent screen relative to the reference surfaces according to a result of steps I) to III), V) orienting (950) the translucent screen (740) by its pivot link according to the orientation angle α determined in step III,
VI) projecting (960) the laser spot onto the translucent screen with the pilot laser,
VII) acquiring (970) the image of the laser spot with the camera (840) and displaying it on the control monitor (891),
VIII) displaying (980) on the control monitor the theoretical position of the center of the laser spot obtained in step III,
IX) acting on the adjustable polyarticulated linkage (220) to make the center of the image of the laser spot (885) coincide with the theoretical position of the center (857) of the laser spot displayed on the control monitor (891).

7. The method of claim 6, further comprising the steps of:
- analyzing (991) with the computer means a distribution of the light intensity of the laser spot acquired in step VII,
- comparing (993) the light distribution of the laser spot acquired in step VII with the power distribution of the laser spot projectable by the optical device,
- deducing (994) deviations from the comparison and displaying the deviations,
- acting on the adjustable polyarticulated link to minimize the deviations.

8. The method of claim 7, wherein the computer means comprise a kinematic model of the adjustable polyarticulated linkage, the method comprising steps of:
- calculating (992) an initial configuration of the adjustable polyarticulated linkage based on the position of the image acquired in step VII and the kinematic model of the adjustable polyarticulated linkage,
- determining (995) a target configuration of the adjustable polyarticulatd linkage to make the center of the laser spot image coincide with the theoretical position of the center of the laser spot displayed on the control monitor according to the kinematic model of the adjustable polyarticulated linkage,
- displaying the target configuration on the control monitor,
- during step IX acting on the adjustable polyarticulated linkage to reproduce the target configuration.
